# EUROPEAN PATENT APPLICATION

(11) **EP 4 600 082 A1**
(43) Date of publication of application: **13.08.2025**
(21) Application number: 25152847.7
(22) Date of filing: 20.01.2025
(51) Int. Cl.: B60L 58/24, B60L 58/26, B60L 58/27, H01M 10/613, H01M 10/615

(54) **BATTERY TEMPERATURE ADJUSTMENT SYSTEM AND BATTERY TEMPERATURE ADJUSTMENT METHOD**

(30) Priority: 31.01.2024 JP 2024012847
(71) Applicant: TOYOTA JIDOSHA KABUSHIKI KAISHA, Aichi-ken, 471-8571 (JP)
(72) Inventor: SASAKI, Hirotaka, Toyota-shi, 471-8571 (JP)
(74) Representative: J A Kemp LLP

(57) **Abstract**

A battery temperature adjustment system is configured to adjust a temperature of an electricity storage device (100) mounted on a vehicle (1). The battery temperature adjustment system includes a temperature adjustment device (800) configured to adjust a temperature of the electricity storage device (100) and a processor (300) configured to control the temperature adjustment device (800). A setting mode of the temperature adjustment device (800) includes a first mode and a second mode.

## Description

### BACKGROUND OF THE INVENTION

### 1. Field of the Invention

The present disclosure relates to a battery temperature adjustment system and a battery temperature adjustment method, and more particularly to a battery temperature adjustment system that adjusts a temperature of an electricity storage device mounted on a vehicle and a battery temperature adjustment method in the battery temperature adjustment system.

### 2. Description of Related Art

There is a technique of performing, when a charging facility is set as a destination of a vehicle, temperature adjustment in advance such that an in-vehicle battery is at a temperature adequate for charging before the vehicle arrives at the destination (for example, refer to Japanese Unexamined Patent Application Publication No. 2009-044887 (JP 2009-044887 A)).

### SUMMARY OF THE INVENTION

In the technique of JP 2009-044887 A, a temperature adjustment control of the in-vehicle battery is performed in accordance with the setting of the destination by an operation of a car navigation system. On the other hand, in the temperature adjustment of the in-vehicle battery, the temperature adjustment may be performed in response to an operation of an in-vehicle switch or the like by a user when the user desires. As described above, both temperature adjustment controls are to perform the temperature adjustment of the in-vehicle battery. There is room for improvement in selectively using the two temperature adjustment controls.

The present disclosure provides a battery temperature adjustment system and a battery temperature adjustment method capable of setting a temperature of an electricity storage device to be in a temperature range adequate for charging an electricity storage device when the electricity storage device arrives at a facility where the electricity storage device can be charged, and suppressing additional electric power consumption due to adjustment of a temperature of the electricity storage device according to an operation of a user to adjust the temperature of the electricity storage device.

A first aspect of the present disclosure relates to a battery temperature adjustment system configured to adjust a temperature of an electricity storage device mounted on a vehicle. The battery temperature adjustment system includes a temperature adjustment device configured to adjust a temperature of the electricity storage device, and a processor configured to control the temperature adjustment device. A setting mode of the temperature adjustment device includes a first mode that is a setting in which, triggered by including a facility where the electricity storage device is chargeable in a traveling route of the vehicle, a temperature of the electricity storage device is adjusted to be in a first temperature range adequate for charging the electricity storage device when the vehicle arrives at the facility, and a second mode that is a setting in which a temperature of the electricity storage device is adjusted to be in a second temperature range when a predetermined operation of a user of the vehicle to adjust the temperature of the electricity storage device is received to be in the second temperature range adequate for charging or traveling. The processor is configured to control the temperature adjustment device to adjust a temperature of the electricity storage device in accordance with the setting mode, and prioritize the first mode when the setting mode is the second mode and the traveling route includes the facility.

According to the first aspect of the present disclosure, in a case of the second mode in which the temperature adjustment is performed on the electricity storage device in response to the predetermined operation of the user, when the traveling route includes the facility where the electricity storage device is chargeable, the first mode in which the temperature adjustment is performed on the electricity storage device, which is triggered by the inclusion, in the traveling route, of the facility where the electricity storage device is chargeable, is prioritized over the second mode. As a result, it is possible to provide the battery temperature adjustment system capable of setting the temperature of the electricity storage device to be in the temperature range adequate for the charging when the vehicle arrives at the facility where the electricity storage device is chargeable, and suppressing additional electric power consumption due to the temperature adjustment of the electricity storage device in response to the operation of the user to adjust the temperature of the electricity storage device.

In the first aspect of the present disclosure, the processor may be configured to prioritize the second mode in a case where the predetermined operation is received when the setting mode is the first mode.

According to the first aspect of the present disclosure, in a case of the first mode in which the temperature adjustment is performed on the electricity storage device, which is triggered by the inclusion, in the traveling route, of the facility where the electricity storage device is chargeable, when the predetermined operation of the user to perform the temperature adjustment on the electricity storage device is received, the second mode in which the temperature adjustment is performed on the electricity storage device in response to the predetermined operation of the user is prioritized. As a result, it is possible to quickly adjust the temperature of the electricity storage device in response to the operation of the user to adjust the temperature of the electricity storage device.

In the first aspect of the present disclosure, the processor may be configured to reject the predetermined operation and maintain the first mode when the predetermined operation is received in a case where the setting mode is the first mode.

According to the first aspect of the present disclosure, in a case of the first mode in which the temperature adjustment is performed on the electricity storage device, which is triggered by the inclusion, in the traveling route, of the facility where the electricity storage device is chargeable, when the predetermined operation of the user to perform the temperature adjustment on the electricity storage device is received, the predetermined operation is rejected, and the first mode is maintained without being switched to the second mode in which the temperature adjustment is performed on the electricity storage device in response to the predetermined operation of the user. As a result, it is possible to set the temperature of the electricity storage device to be in the temperature range adequate for the charging when the vehicle arrives at the facility where the electricity storage device is chargeable, and to suppress additional electric power consumption due to the temperature adjustment of the electricity storage device in response to the operation of the user to adjust the temperature of the electricity storage device.

In the first aspect of the present disclosure, a display device configured to display the setting mode of the temperature adjustment device may be further provided. The display device may be configured to include a common element in a display in the first mode and the second mode, and add a specific element to the common element being one of the first mode and the second mode. The processor may be configured to control the display device to display the common element when the setting mode is the first mode and the second mode, and control the display device to display the specific element when the setting mode is the one of the first mode and the second mode.

According to the first aspect of the present disclosure, in a case where the setting mode is the first mode in which the temperature adjustment is performed on the electricity storage device, which is triggered by the inclusion, in the traveling route, of the facility where the electricity storage device is chargeable, and the second mode in which the temperature adjustment is performed on the electricity storage device in response to the predetermined operation of the user, the common element is displayed on the display device in both the first mode and the second mode, and the specific element is displayed on the display device in any one of the first mode and the second mode. As a result, it is possible to inform the user of a plurality of settings for adjusting the temperature of the electricity storage device in an easily understandable manner, and thus suppress reduction in user usability.

A second aspect of the present disclosure relates to a battery temperature adjustment method for a battery temperature adjustment system that is configured to adjust a temperature of an electricity storage device mounted on a vehicle. The battery temperature adjustment system includes a temperature adjustment device and a processor. The battery temperature adjustment method includes controlling, by the processor, the temperature adjustment device to adjust a temperature of the electricity storage device according to a setting mode of the temperature adjustment device, and prioritizing, by the processor a first mode in a case where a traveling route includes a facility when the setting mode is a second mode. The temperature adjustment device is configured to adjust a temperature of the electricity storage device. The processor is configured to control the temperature adjustment device. The setting mode includes the first mode and the second mode. The first mode is a mode that is a setting in which, triggered by including the facility where the electricity storage device is chargeable in the traveling route of the vehicle, a temperature of the electricity storage device is adjusted to be in a first temperature range adequate for charging the electricity storage device when the vehicle arrives at the facility. The second mode is a mode that is a setting in which a temperature of the electricity storage device is adjusted to be in a second temperature range when a predetermined operation of a user of the vehicle is received to adjust the temperature of the electricity storage device to be in the second temperature range adequate for charging or traveling.

According to the second aspect of the present disclosure, it is possible to provide the battery temperature adjustment method capable of setting the temperature of the electricity storage device to be in the temperature range adequate for the charging when the vehicle arrives at the facility where the electricity storage device is chargeable, and suppressing additional electric power consumption due to the temperature adjustment of the electricity storage device in response to the operation of the user to adjust the temperature of the electricity storage device.

According to the aspects of the present disclosure, it is possible to provide the battery temperature adjustment system and the battery temperature adjustment method capable of setting the temperature of the electricity storage device to be in the temperature range adequate for the charging when the vehicle arrives at the facility where the electricity storage device is chargeable, and suppressing additional electric power consumption due to the temperature adjustment of the electricity storage device in response to the operation of the user to adjust the temperature of the electricity storage device.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is an overall configuration diagram of an electrified vehicle according to the present embodiment;
FIG. 2 is a flowchart showing a flow of battery temperature adjustment setting processing according to a first embodiment;
FIG. 3A is a diagram showing an indicator of a pre-conditioning switch according to the present embodiment;
FIG. 3B is a diagram showing the indicator of the pre-conditioning switch according to the present embodiment;
FIG. 3C is a diagram showing the indicator of the pre-conditioning switch according to the present embodiment;
FIG. 4 is a flowchart showing a flow of battery temperature adjustment execution processing according to the present embodiment;
FIG. 5 is a flowchart showing the flow of the battery temperature adjustment setting processing according to a second embodiment;
FIG. 6 is a flowchart showing the flow of the battery temperature adjustment setting processing according to a third embodiment;
FIG. 7 is a flowchart showing the flow of the battery temperature adjustment setting processing according to a fourth embodiment; and
FIG. 8 is a flowchart showing the flow of the battery temperature adjustment setting processing according to a fifth embodiment.

### DETAILED DESCRIPTION OF EMBODIMENTS

Hereinafter, embodiments of the present disclosure will be described in detail with reference to drawings. In the drawings, the same or corresponding elements are denoted by the same reference numerals and descriptions thereof will not be repeated.

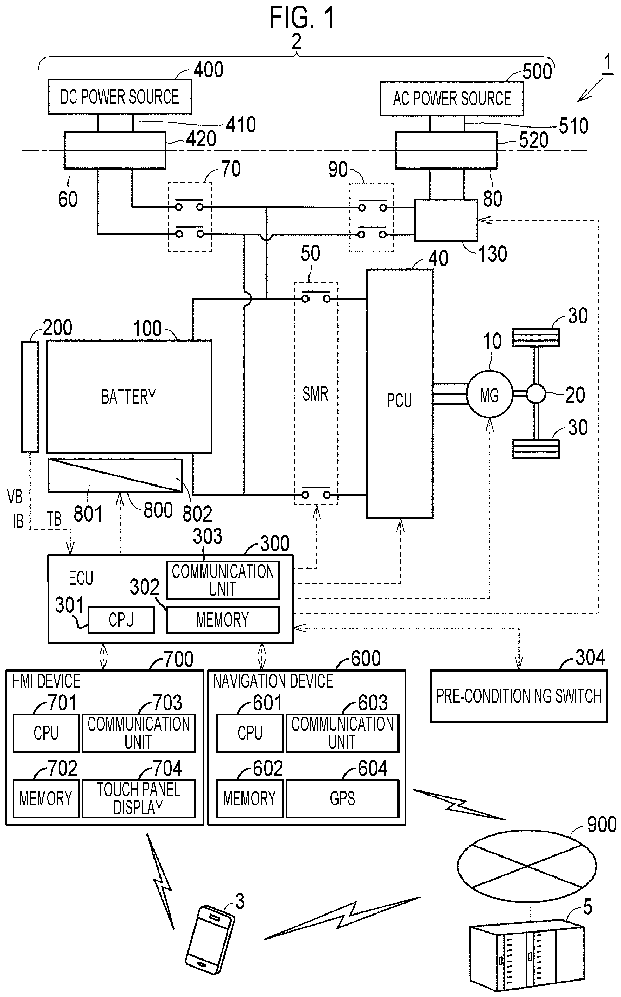

FIG. 1 is an overall configuration diagram of an electrified vehicle 1 according to the present embodiment. In the present embodiment, the electrified vehicle 1 is, for example, a battery electric vehicle (BEV). The electrified vehicle 1 includes a motor generator (MG) 10 that is a rotary electric machine, a power transmission gear 20, drive wheels 30, a power control unit (PCU) 40, a system main relay (SMR) 50, a battery 100, a monitoring unit 200, and an electronic control unit (ECU) 300.

The MG 10 is, for example, an interior permanent magnet synchronous motor (IPM motor), and has a function as a motor and a function as a generator. An output torque of the MG 10 is transmitted to the drive wheels 30 via the power transmission gear 20 configured by including a speed reducer, a differential gear, and the like.

When the electrified vehicle 1 is braked, the MG 10 is driven by the drive wheels 30, and the MG 10 operates as the generator. Accordingly, the MG 10 also functions as a braking device that performs regenerative braking to convert kinetic energy of the electrified vehicle 1 into electric power. The regenerative electric power generated by a regenerative braking force in the MG 10 is accumulated in the battery 100.

The PCU 40 is an electric power conversion device that converts the electric power bidirectionally between the MG 10 and the battery 100. The PCU 40 includes, for example, an inverter and a converter that operate based on a control signal from the ECU 300. The PCU 40 may have a configuration in which the converter is omitted.

The SMR 50 is electrically connected to an electric power line that connects the battery 100 and the PCU 40. When the SMR 50 is closed (ON) in response to the control signal from the ECU 300 (in a conductive state), the electric power may be exchanged between the battery 100 and the PCU 40. On the other hand, when the SMR 50 is opened (OFF) in response to the control signal from the ECU 300 (in a cutoff state), the electrical connection between the battery 100 and the PCU 40 is cut off.

The battery 100 accumulates the electric power for driving the MG 10. The battery 100 is a rechargeable direct current power source (secondary battery), and is configured of a plurality of single batteries (battery cells), which is stacked and, for example, electrically connected in series. The battery 100 is an example of an electricity storage battery. The single battery is configured of, for example, a lithium-ion battery. The single battery may be a nickel-metal hydride battery or may be an all-solid-state battery.

The monitoring unit 200 includes a voltage detection unit, a current sensor, and a temperature detection unit. The voltage detection unit detects a voltage VB of the battery. The current sensor detects a current IB input and output to and from the battery 100. The temperature detection unit detects a temperature TB of the battery 100. Each detection unit outputs a detection result thereof to the ECU 300.

The electrified vehicle 1 includes a DC inlet 60 and an AC inlet 80, and is capable of charging the battery 100 (external charging) from electric vehicle supply equipment (EVSE) (charging equipment) 2 that includes an external DC power source 400, an external AC power source 500, or the like. The DC inlet 60 is configured to be connectable to a connector 420 provided at a tip of a charging cable 410 of the external DC power source (EVSE) 400. A charging relay 70 is electrically connected to the electric power line that connects the DC inlet 60 and the battery 100. The charging relay 70 switches supply and cutoff of the electric power between the DC inlet 60 and the battery 100 in response to the control signal from the ECU 300. With closing of the charging relay 70, the external charging (rapid charging) of the battery 100 is executed.

The AC inlet 80 is configured to be connectable to a connector 520 provided at a tip of a charging cable 510 of the external AC power source (EVSE) 500. An in-vehicle charger 130 is provided in the electric power line between the AC inlet 80 and the battery 100, and converts an alternating current electric power supplied from the external AC power source into a direct current electric power and converts a voltage of the battery 100 to a voltage adequate for charging the battery 100. A charging relay 90 is electrically connected to the electric power line that connects the in-vehicle charger 130 and the battery 100. The charging relay 90 switches the supply and cutoff of the electric power between the in-vehicle charger 130 and the battery 100 in response to the control signal from the ECU 300. With closing of the charging relay 90, the external charging (normal charging) of the battery 100 is executed. When the electrified vehicle 1 (battery 100) is charged, the external charging is performed using any one of the external DC power source 400 or the external AC power source 500.

The ECU 300 includes a central processing unit (CPU) 301, a memory (for example, a read-only memory (ROM) and a random access memory (RAM)) 302, and a communication unit 303. The ECU 300 controls each device such that the electrified vehicle 1 is brought into a desired state, based on a signal received from the monitoring unit 200, signals (for example, an accelerator operation amount signal and a vehicle speed signal) from various sensors (not shown), and information such as a map and a program stored in the memory 302. The communication unit 303 includes a communication interface (I/F) for performing wireless communication with a network 900 and a user terminal 3. The communication unit 303 may include a telematics control unit (TCU) and/or a data communication module (DCM) for performing the wireless communication. Further, the ECU 300 controls a cooling/heating device 800 described below.

A navigation device 600 calculates a current position (own vehicle position), based on map data including information on a position, an output, and the like of the EVSE (for example, the DC power source 400 and the AC power source 500) and the like, and global positioning system (GPS) information. The navigation device 600 is configured of a GPS 604 and the like, in addition to the same CPU 601, memory 602, and communication unit 603 as the ECU 300, and is implemented by executing a program stored in the memory. The navigation device 600 performs route guidance to a destination set by the user. Further, a via point can be set on the route toward the destination. The map data may be configured to be acquired through communication via an external server 5 and the network 900.

A human machine interface (HMI) device 700 includes an input device and a display device. The HMI device 700 includes a touch panel display 704 that functions as the input device and the display device, in addition to the same CPU 701, memory 702, and communication unit 703 as the ECU 300. The touch panel display 704 is also shared as the input device and the display device of the navigation device 600.

The user terminal 3 is configured to be portable by the user. The user terminal 3 is a mobile terminal that is carried and operated by the user (vehicle manager) of the electrified vehicle 1. In the present embodiment, a smartphone equipped with a touch panel display is employed as the user terminal 3. The user terminal 3 can employ any terminal that can be carried by the user of the electrified vehicle 1. For example, a laptop, a tablet device, a portable game console, or a wearable device (such as a smartwatch, smart glasses, or smart gloves) can also be employed as the user terminal 3. The user terminal 3 is communicable with the communication unit 303 by, for example, short-range wireless communication, and is communicable with the external server 5 via the network 900.

The electrified vehicle 1 includes the cooling/heating device 800. The cooling/heating device 800 adjusts the temperature of the battery 100. The cooling/heating device 800 is configured of a battery cooling unit (battery cooling system) 801 and a battery heating unit (battery heating system) 802. The cooling/heating device 800 may be configured to cool/heat the battery 100, and may be an air cooling (heat exchange using gas as a medium) or a liquid cooling (heat exchange using liquid as a medium), may utilize heat dissipation of the MG 10 or the PCU 40, or may use heat generated by charging and discharging of the battery 100.

The battery 100 has an appropriate charging electric power (charging current) according to the temperature TB of the battery 100. When the battery 100 is charged with a current exceeding the appropriate charging electric power, deterioration of the battery 100 may be accelerated. Further, when the battery 100 is charged with a current exceeding an electric power that can be received by the battery 100 (allowable electric power), a charging efficiency deteriorates, and electric power consumption during the charging increases. In order to suppress the deterioration of the battery 100, when the charging electric power (charging current) is limited in a case where the temperature TB is high or low, a charging time becomes longer depending on a state of the temperature TB. Therefore, when the external charging of the battery 100 is assumed, the temperature of the battery 100 is preferably adjusted to an appropriate temperature range in advance before the charging is started.

There is a technique of performing, when a charging facility installed with the charging equipment, such as the EVSE 2, is set as the destination of the electrified vehicle 1, temperature adjustment in advance such that the temperature of the battery 100 is in the temperature range adequate for the charging before the electrified vehicle 1 arrives at the destination. In such a technique, the temperature adjustment control of the battery 100 is performed in accordance with the setting of the destination by the operation of the navigation device 600. On the other hand, in the temperature adjustment of the battery 100, the temperature adjustment may be performed in response to an operation of an in-vehicle switch or the like by the user when the user desires. As described above, both temperature adjustment controls are to perform the temperature adjustment of the battery 100. There is room for improvement in selectively using the two temperature adjustment controls.

### First Embodiment

A setting mode of the cooling/heating device 800 includes a navigation-triggered temperature adjustment mode that is a setting in which, triggered by inclusion of a facility where the battery 100 is chargeable in a traveling route of the electrified vehicle 1, the temperature of the battery 100 is adjusted to be in a first temperature range adequate for the charging when the electrified vehicle 1 arrives at the facility, and an operation-triggered temperature adjustment mode that is a setting in which, when a predetermined operation to adjust the temperature of the battery 100 to be in a second temperature range adequate for the charging or the traveling by the user of the electrified vehicle 1 is received, the temperature of the battery 100 is adjusted to be in the second temperature range. The CPU 301 of the ECU 300 controls the cooling/heating device 800 to adjust the temperature of the battery 100 according to the setting mode. When the predetermined operation is received in a case where the setting mode is the navigation-triggered temperature adjustment mode, the operation-triggered temperature adjustment mode is prioritized.

Accordingly, in a case of the navigation-triggered temperature adjustment mode in which the temperature adjustment is performed on the battery 100, which is triggered by the inclusion of the facility where the battery 100 is chargeable in the traveling route, when the predetermined operation of the user to perform the temperature adjustment of the battery 100 is received, the operation-triggered temperature adjustment mode in which the temperature adjustment is performed on the battery 100 in response to the predetermined operation of the user is prioritized. As a result, it is possible to quickly adjust the temperature of the battery 100 in response to the operation of the user to adjust the temperature of the battery 100.

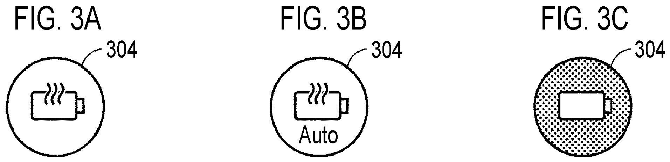

Further, as shown in FIG. 1, the electrified vehicle 1 further includes a pre-conditioning switch 304 that displays the setting mode of the cooling/heating device 800. The pre-conditioning switch 304 is, for example, a push-button switch having an indicator on an operation surface. As shown in FIGS. 3A, 3B, and 3C described below, the pre-conditioning switch 304 includes a common element in the display for both the navigation-triggered temperature adjustment mode and the operation-triggered temperature adjustment mode, and adds a specific element to the common element of any one of the navigation-triggered temperature adjustment mode and the operation-triggered temperature adjustment mode. The CPU 301 of the ECU 300 controls the pre-conditioning switch 304 to display the common element when the setting mode is the navigation-triggered temperature adjustment mode and the operation-triggered temperature adjustment mode, and to display the specific element when the setting mode is one of the navigation-triggered temperature adjustment mode and the operation-triggered temperature adjustment mode.

Accordingly, in a case of the navigation-triggered temperature adjustment mode in which the temperature adjustment is performed on the battery 100, which is triggered by the inclusion of the facility where the battery 100 is chargeable in the traveling route, and the operation-triggered temperature adjustment mode in which the temperature adjustment is performed on the battery 100 in response to the predetermined operation of the user, the common element is displayed on the pre-conditioning switch 304 in both the navigation-triggered temperature adjustment mode and the operation-triggered temperature adjustment mode, and the specific element is displayed on the pre-conditioning switch 304 in any one of the navigation-triggered temperature adjustment mode and the operation-triggered temperature adjustment mode. As a result, it is possible to inform the user of a plurality of settings for adjusting the temperature of the battery 100 in an easily understandable manner, and thus suppress reduction in user usability.

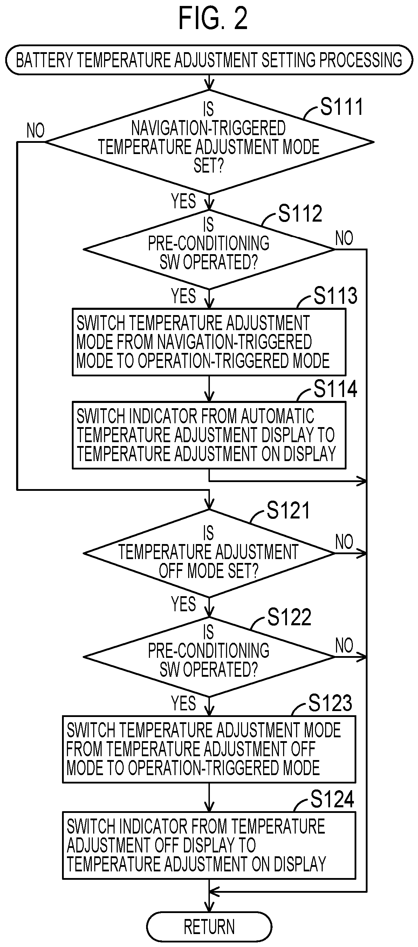

FIG. 2 is a flowchart showing a flow of battery temperature adjustment setting processing in the first embodiment. With reference to FIG. 2, the battery temperature adjustment setting processing is called, from higher-level processing, and executed by the CPU 301 of the ECU 300 at a predetermined cycle.

First, the CPU 301 of the ECU 300 determines whether or not the setting mode of the cooling/heating device 800 is set to the navigation-triggered temperature adjustment mode (step S111). When determination is made that the navigation-triggered temperature adjustment mode is set (YES in step S111), the CPU 301 determines whether or not the pre-conditioning switch 304 is turned on (step S112).

When determination is made that the pre-conditioning switch 304 is turned on (YES in step S112), the CPU 301 switches the setting mode of the cooling/heating device 800 from the navigation-triggered temperature adjustment mode to the operation-triggered temperature adjustment mode (step S113), and controls the pre-conditioning switch 304 to switch the indicator of the pre-conditioning switch 304 from an automatic temperature adjustment display to a temperature adjustment on display (step S114).

FIGS. 3A, 3B, and 3C are diagrams showing the indicator of the pre-conditioning switch 304 in the present embodiment. With reference to FIGS. 3A, 3B, and 3C, FIG. 3A shows the temperature adjustment on display. The temperature adjustment on display indicates that the setting mode of the cooling/heating device 800 is the operation-triggered temperature adjustment mode. FIG. 3B shows the automatic temperature adjustment display. The automatic temperature adjustment display indicates that the setting mode of the cooling/heating device 800 is the navigation-triggered temperature adjustment mode. FIG. 3C shows a temperature adjustment off display. The temperature adjustment off display indicates that the setting mode of the cooling/heating device 800 is a temperature adjustment off mode in which the temperature adjustment by the cooling/heating device 800 is not performed.

The temperature adjustment on display, the automatic temperature adjustment display, and the temperature adjustment off display, which indicate the setting modes of the cooling/heating device 800, include a first common element. The first common element is an image showing the battery 100, for example, a picture of a dry cell in the present embodiment. However, the present disclosure is not limited thereto, and another image may be employed. Further, the temperature adjustment on display and the automatic temperature adjustment display, which indicate the setting modes in which the temperature adjustment may be performed, include a second common element. The second common element is an image indicating that the temperature adjustment is performed on the battery 100, for example, three vertical wavy lines, in the present embodiment. However, the present disclosure is not limited thereto, and another image may be employed. Further, the specific element is added to the common element of any one of the temperature adjustment on display and the automatic temperature adjustment display (the automatic temperature adjustment display in the present embodiment). The specific element is an image indicating that the navigation-triggered temperature adjustment mode is set, for example, a character "Auto", in the present embodiment. However, the present disclosure is not limited thereto, and another image may be employed. The operation surface is illuminated by an LED lamp from a back surface in the temperature adjustment on display and the automatic temperature adjustment display, while the LED lamp is turned off in the temperature adjustment off display.

Returning to FIG. 2, when determination is made that the navigation-triggered temperature adjustment mode is not set (NO in step S111), the CPU 301 determines whether or not the setting mode of the cooling/heating device 800 is set to the temperature adjustment off mode (step S121). When determination is made that the temperature adjustment off mode is set (YES in step S121), the CPU 301 determines whether or not the pre-conditioning switch 304 is turned on (step S122).

When determination is made that the pre-conditioning switch 304 is turned on (YES in step S122), the CPU 301 switches the setting mode of the cooling/heating device 800 from the temperature adjustment off mode to the operation-triggered temperature adjustment mode (step S123), and controls the pre-conditioning switch 304 such that the indicator of the pre-conditioning switch 304 is switched from the temperature adjustment off display shown in FIG. 3C to the temperature adjustment on display shown in FIG. 3A (step S124).

When determination is made in step S112 that the pre-conditioning switch 304 is not turned on (NO in step S112), when determination is made that the temperature adjustment off mode is not set (NO in step S121) and when determination is made in step S122 that the pre-conditioning switch 304 is not turned on (NO in step S122), after step S114, and after step S124, the CPU 301 returns the processing to be executed to the higher-level processing, which is a calling source of the battery temperature adjustment setting processing.

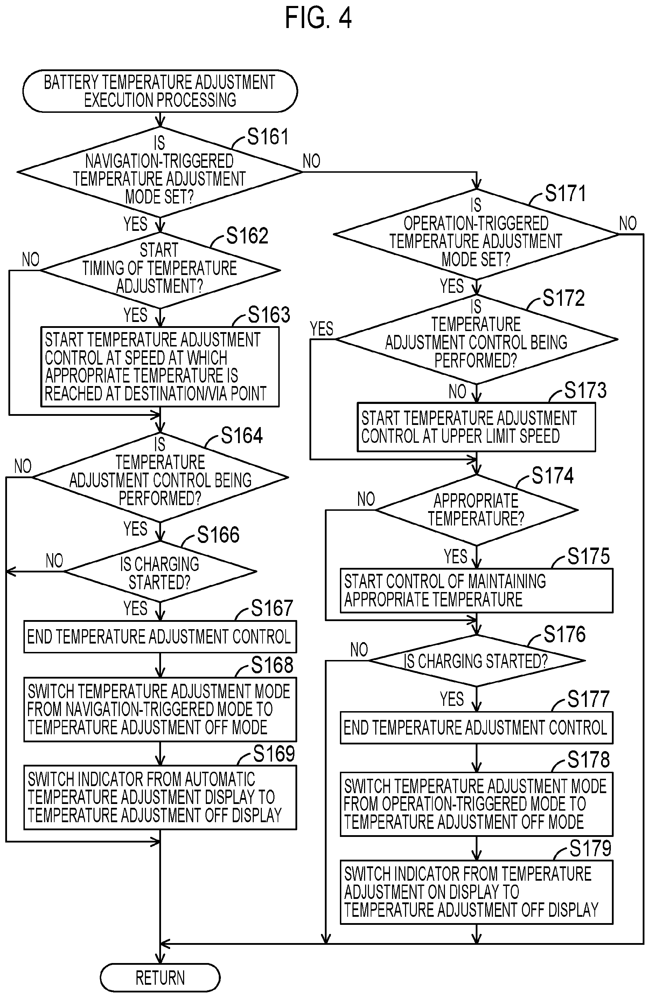

FIG. 4 is a flowchart showing a flow of battery temperature adjustment execution processing in the present embodiment. With reference to FIG. 4, the battery temperature adjustment execution processing is called, from higher-level processing, and executed by the CPU 301 of the ECU 300 at a predetermined cycle.

First, the CPU 301 of the ECU 300 determines whether or not the setting mode of the cooling/heating device 800 is set to the navigation-triggered temperature adjustment mode (step S161). When determination is made that the navigation-triggered temperature adjustment mode is set (YES in step S161), the CPU 301 determines whether or not a current time point is a start timing of the temperature adjustment (step S162). In the navigation-triggered temperature adjustment mode, the start timing of the temperature adjustment is a timing at which the temperature adjustment is started such that the temperature of the battery 100 is in the temperature range adequate for the charging when the electrified vehicle 1 arrives at the facility, where the battery 100 is chargeable, included in the traveling route of the electrified vehicle 1. For example, the time point to start the temperature adjustment is obtained by subtracting a time required for the temperature adjustment from a scheduled arrival time point at the facility. The time required for the temperature adjustment is calculated as (a target temperature in the temperature range adequate for charging the battery 100 minus a current temperature of the battery 100) divided by a change speed of the temperature of the battery 100 per unit time. When the current time point is before the time point at which the temperature adjustment is started, cooling or heating may be initiated at the current time point, and the change speed may be reduced such that the temperature of the battery 100 reaches the target temperature at the scheduled arrival time point to the facility.

When determination is made that the current time point is the start timing of the temperature adjustment (YES in step S162), the CPU 301 controls the cooling/heating device 800 such that the temperature adjustment control is started at a speed at which the temperature of the battery 100 reaches the target temperature adequate for the charging in the facility where the battery 100 is chargeable, which is the destination/via point of the traveling route (step S163).

When determination is made that the current time point is not the start timing of the temperature adjustment (NO in step S162) or after step S163, the CPU 301 determines whether or not the temperature adjustment control is being performed (step S164). When determination is made that the temperature adjustment control is being performed (YES in step S164), the CPU 301 determines whether or not the charging of the battery 100 is started (step S166).

When determination is made that the charging of the battery 100 is started (YES in step S166), the CPU 301 ends the temperature adjustment control by the cooling/heating device 800 (step S167), switches the setting mode of the cooling/heating device 800 from the navigation-triggered temperature adjustment mode to the temperature adjustment off mode (step S168), and controls the pre-conditioning switch 304 such that the indicator of the pre-conditioning switch 304 is switched from the automatic temperature adjustment display shown in FIG. 3B to the temperature adjustment off display shown in FIG. 3C (step S169).

When determination is made that the temperature adjustment control is not being performed (NO in step S164), when determination is made that the charging of the battery 100 is not started (NO in step S166), and after step S169, the CPU 301 returns the processing to be executed to the higher-level processing, which is a calling source of the battery temperature adjustment execution processing.

When determination is made that the navigation-triggered temperature adjustment mode is not set (NO in step S161), the CPU 301 determines whether or not the setting mode of the cooling/heating device 800 is set to the operation-triggered temperature adjustment mode (step S171). When determination is made that the operation-triggered temperature adjustment mode is set (YES in step S171), the CPU 301 determines whether or not the temperature adjustment control is being performed (step S172). When determination is made that the temperature adjustment control is not being performed (NO in step S172), the CPU 301 controls the cooling/heating device 800 such that the temperature adjustment control is started at an upper limit speed of the cooling/heating device 800 (step S173).

When determination is made that the temperature adjustment control is being performed (YES in step S172) or after step S173, the CPU 301 determines whether or not the temperature of the battery 100 reaches the target temperature in the temperature range adequate for the charging or the traveling, that is, the appropriate temperature (step S174). When determination is made that the appropriate temperature is reached (YES in step S174), the CPU 301 controls the cooling/heating device 800 to start control of maintaining the appropriate temperature of the battery 100 (step S175).

When determination is made that the appropriate temperature is not reached (NO in step S174) or after step S175, the CPU 301 determines whether or not the charging of the battery 100 is started (step S176).

When determination is made that the charging of the battery 100 is started (YES in step S176), the CPU 301 ends the temperature adjustment control by the cooling/heating device 800 (step S177), switches the setting mode of the cooling/heating device 800 from the operation-triggered temperature adjustment mode to the temperature adjustment off mode (step S178), and controls the pre-conditioning switch 304 such that the indicator of the pre-conditioning switch 304 is switched from the temperature adjustment on display shown in FIG. 3A to the temperature adjustment off display shown in FIG. 3C (step S179).

When determination is made that the operation-triggered temperature adjustment mode is not set (NO in step S171), when determination is made that the charging of the battery 100 is not started (NO in step S176), and after step S179, the CPU 301 returns the processing to be executed to the higher-level processing, which is the calling source of the battery temperature adjustment execution processing.

### Second Embodiment

In the first embodiment, as shown in step S113 of FIG. 2, in a case of the navigation-triggered temperature adjustment mode in which the temperature adjustment is performed on the battery 100, which is triggered by the inclusion of the facility where the battery 100 is chargeable in the traveling route, when the predetermined operation to perform the temperature adjustment of the battery 100 is received, the CPU 301 of the ECU 300 prioritizes the operation-triggered temperature adjustment mode in which the temperature adjustment is performed on the battery 100 in response to the predetermined operation.

In the second embodiment, in a case where the setting mode is the navigation-triggered temperature adjustment mode, when the predetermined operation of the user to adjust the temperature of the battery 100 is received, the CPU 301 of the ECU 300 rejects the predetermined operation and maintains the navigation-triggered temperature adjustment mode.

Accordingly, in a case of the navigation-triggered temperature adjustment mode, when the predetermined operation is received, the predetermined operation is rejected, and the navigation-triggered temperature adjustment mode is maintained without being switched to the operation-triggered temperature adjustment mode. As a result, it is possible to set the temperature of the battery 100 to be in the temperature range adequate for the charging when the electrified vehicle 1 arrives at the facility where the battery 100 is chargeable, and to suppress additional electric power consumption due to the temperature adjustment of the battery 100 in response to the operation of the user to adjust the temperature of the battery 100.

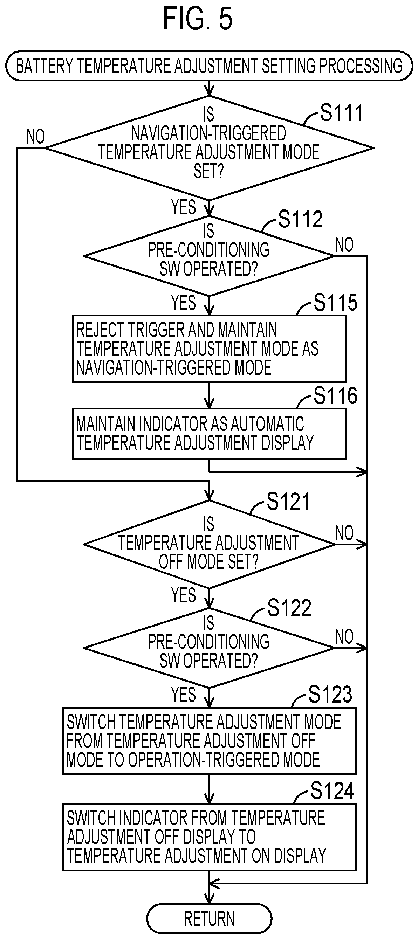

FIGS. 1, 3A, 3B, 3C, and 4 of the first embodiment are also common to the second embodiment. FIG. 5 is a flowchart showing the flow of the battery temperature adjustment setting processing according to the second embodiment. With reference to FIG. 5, the battery temperature adjustment setting processing is called, from the higher-level processing, and executed by the CPU 301 of the ECU 300 at a predetermined cycle. For steps in FIG. 5 having the same reference numerals as steps in FIG. 2, the same processing as steps in FIG. 2 is performed. Thus, duplicated descriptions will not be repeated.

When determination is made that the pre-conditioning switch 304 is turned on (YES in step S112), the CPU 301 rejects the trigger that the pre-conditioning switch 304 is turned on, maintains the setting mode of the cooling/heating device 800 as the navigation-triggered temperature adjustment mode (step S115), and maintains the indicator of the pre-conditioning switch 304 as the automatic temperature adjustment display shown in FIG. 3B (step S116). After step S116, the CPU 301 returns the processing to be executed to the higher-level processing, which is the calling source of the battery temperature adjustment setting processing.

### Third Embodiment

In the second embodiment, as shown in step S115 of FIG. 5, in a case of the navigation-triggered temperature adjustment mode in which the temperature adjustment is performed on the battery 100, which is triggered by the inclusion of the facility where the battery 100 is chargeable in the traveling route, when the predetermined operation of the user to perform the temperature adjustment of the battery 100 is received, the CPU 301 of the ECU 300 rejects the predetermined operation and maintains the navigation-triggered temperature adjustment mode.

In the third embodiment, in a case where the setting mode is the operation-triggered temperature adjustment mode in which the temperature adjustment is performed on the battery 100 in response to the predetermined operation of the user, when the traveling route of the electrified vehicle 1 includes the facility where the battery 100 is chargeable, the CPU 301 of the ECU 300 maintains the operation-triggered temperature adjustment mode.

Accordingly, in a case of the operation-triggered temperature adjustment mode, when the traveling route includes the facility where the battery 100 is chargeable, the operation-triggered temperature adjustment mode is maintained without being switched to the navigation-triggered temperature adjustment mode. As a result, it is possible to quickly adjust the temperature of the battery 100 in response to the operation of the user to adjust the temperature of the battery 100.

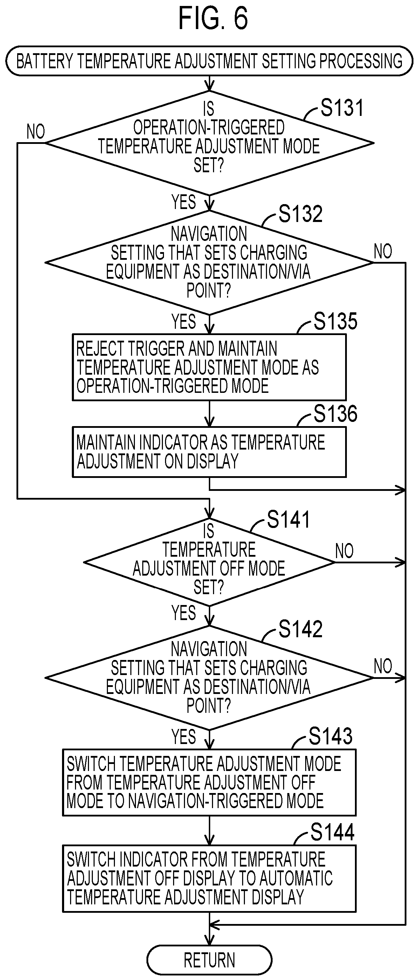

FIGS. 1, 3A, 3B, 3C, and 4 of the first embodiment are also common to the third embodiment. FIG. 6 is a flowchart showing the flow of the battery temperature adjustment setting processing according to the third embodiment. With reference to FIG. 6, the battery temperature adjustment setting processing is called, from the higher-level processing, and executed by the CPU 301 of the ECU 300 at a predetermined cycle.

First, the CPU 301 of the ECU 300 determines whether or not the setting mode of the cooling/heating device 800 is set to the operation-triggered temperature adjustment mode (step S131). When determination is made that the operation-triggered temperature adjustment mode is set (YES in step S131), the CPU 301 determines whether or not the navigation device 600 receives a navigation setting that sets the charging equipment, such as the EVSE 2, as the destination or the via point (step S132).

When determination is made that the navigation setting that sets the charging equipment as the destination/via point is received (YES in step S132), the CPU 301 rejects the trigger that the navigation setting that sets the charging equipment as the destination/via point is received, maintains the setting mode of the cooling/heating device 800 as the operation-triggered temperature adjustment mode (step S135), and maintains the indicator of the pre-conditioning switch 304 as the temperature adjustment on display shown in FIG. 3A (step S136).

When determination is made that the operation-triggered temperature adjustment mode is not set (NO in step S131), the CPU 301 determines whether or not the setting mode of the cooling/heating device 800 is set to the temperature adjustment off mode (step S141). When determination is made that the temperature adjustment off mode is set (YES in step S141), the CPU 301 determines whether or not the navigation device 600 receives a navigation setting that sets the charging equipment, such as the EVSE 2, as the destination or the via point (step S142).

When determination is made that the navigation setting that sets the charging equipment as the destination/via point is received (YES in step S142), the CPU 301 switches the setting mode of the cooling/heating device 800 from the temperature adjustment off mode to the navigation-triggered temperature adjustment mode (step S143), and controls the pre-conditioning switch 304 such that the indicator of the pre-conditioning switch 304 is switched from the temperature adjustment off display shown in FIG. 3C to the automatic temperature adjustment display shown in FIG. 3B (step S144).

When determination is made in step S132 that the navigation setting that sets the charging equipment as the destination/via point is not received (NO in step S132), after step S136, when determination is made that the temperature adjustment off mode is not set (NO in step S141) and when determination is made in step S142 that the navigation setting that sets the charging equipment as the destination/via point is not received (NO in step S142), and after step S144, the CPU 301 returns the processing to be executed to the higher-level processing, which is the calling source of the battery temperature adjustment setting processing.

### Fourth Embodiment

In the third embodiment, as shown in step S135 of FIG. 6, in a case where the setting mode is the operation-triggered temperature adjustment mode in which the temperature adjustment is performed on the battery 100 in response to the predetermined operation of the user, when the traveling route of the electrified vehicle 1 includes the facility where the battery 100 is chargeable, the CPU 301 of the ECU 300 maintains the operation-triggered temperature adjustment mode.

In the fourth embodiment, in a case where the setting mode is the operation-triggered temperature adjustment mode, when the traveling route of the electrified vehicle 1 includes the facility where the battery 100 is chargeable, the CPU 301 of the ECU 300 prioritizes the navigation-triggered temperature adjustment mode in which the temperature adjustment is performed on the battery 100, which is triggered by the inclusion of the facility where the battery 100 is chargeable in the traveling route.

Accordingly, in a case of the operation-triggered temperature adjustment mode, the navigation-triggered temperature adjustment mode is prioritized over the operation-triggered temperature adjustment mode. As a result, it is possible to set the temperature of the battery 100 to be in the temperature range adequate for the charging when the electrified vehicle 1 arrives at the facility where the battery 100 is chargeable, and to suppress additional electric power consumption due to the temperature adjustment of the battery 100 in response to the operation of the user to adjust the temperature of the battery 100.

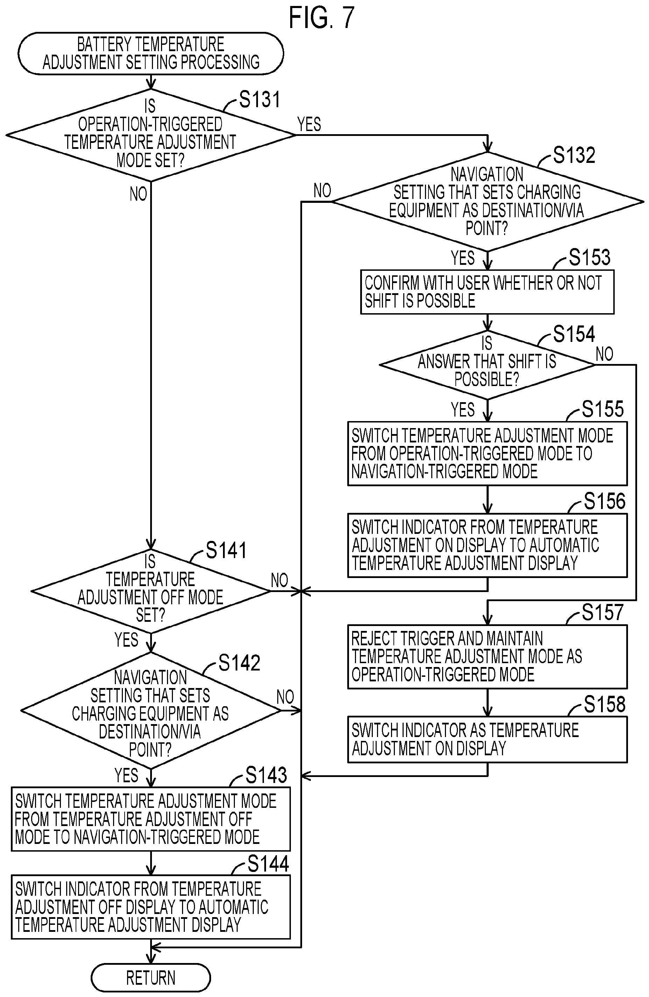

FIGS. 1, 3A, 3B, 3C, and 4 of the first embodiment are also common to the fourth embodiment. FIG. 7 is a flowchart showing the flow of the battery temperature adjustment setting processing in the fourth embodiment. With reference to FIG. 7, the battery temperature adjustment setting processing is called, from the higher-level processing, and executed by the CPU 301 of the ECU 300 at a predetermined cycle. For steps in FIG. 7 having the same reference numerals as steps in FIG. 6, the same processing as steps in FIG. 6 is performed. Thus, duplicated descriptions will not be repeated.

When determination is made that the navigation setting that sets the charging equipment as the destination/via point is received (YES in step S132), the CPU 301 controls the HMI device 700 through the communication unit 303 to output a display (or voice) message to confirm with the user whether or not the setting mode may be shifted from the operation-triggered temperature adjustment mode to the navigation-triggered temperature adjustment mode (step S153). The CPU 701 of the HMI device 700 controls the touch panel display 704 to output the message to confirm with the user whether or not the setting mode is shifted from the operation-triggered temperature adjustment mode to the navigation-triggered temperature adjustment mode, in response to the control signal from the CPU 301 of the ECU 300 received by the communication unit 703.

Next, the CPU 301 determines whether or not an answer to the confirmation in step S153 is that the shift is possible (step S154). When determination is made that the answer is that the shift is possible (YES in step S154), the CPU 301 switches the setting mode of the cooling/heating device 800 from the operation-triggered temperature adjustment mode to the navigation-triggered temperature adjustment mode (step S155), and switches the indicator of the pre-conditioning switch 304 from the temperature adjustment on display shown in FIG. 3A to the automatic temperature adjustment display shown in FIG. 3B (step S156).

On the other hand, when determination is made that the answer is that the shift is not possible (NO in step S154), the CPU 301 rejects the trigger that the navigation setting that sets the charging equipment as the destination/via point is received, maintains the setting mode of the cooling/heating device 800 as the operation-triggered temperature adjustment mode (step S157), and maintains the indicator of the pre-conditioning switch 304 as the temperature adjustment on display shown in FIG. 3A (step S158).

When determination is made in step S132 that the navigation setting that sets the charging equipment as the destination/via point is not received (NO in step S132), after step S156, and after step S158, the CPU 301 returns the processing to be executed to the higher-level processing, which is the calling source of the battery temperature adjustment setting processing.

### Fifth Embodiment

In the fourth embodiment, as shown in steps S153 to S155 of FIG. 7, in a case of the operation-triggered temperature adjustment mode in which the temperature adjustment is performed on the battery 100 in response to the predetermined operation of the user, when the traveling route of the electrified vehicle 1 includes the facility where the battery 100 is chargeable, the CPU 301 of the ECU 300 confirms with the user whether or not to switch to the navigation-triggered temperature adjustment mode in which the temperature adjustment is performed on the battery 100, which is triggered by the inclusion of the facility where the battery 100 is chargeable in the traveling route.

In the fifth embodiment, in a case where the setting mode is the operation-triggered temperature adjustment mode, when the traveling route of the electrified vehicle 1 includes the facility where the battery 100 is chargeable, the CPU 301 of the ECU 300 switches from the operation-triggered temperature adjustment mode to the navigation-triggered temperature adjustment mode to prioritize the navigation-triggered temperature adjustment mode.

Accordingly, in a case of the operation-triggered temperature adjustment mode, when the traveling route includes the facility where the battery 100 is chargeable, the navigation-triggered temperature adjustment mode is prioritized over the operation-triggered temperature adjustment mode. As a result, it is possible to set the temperature of the battery 100 to be in the temperature range adequate for the charging when the electrified vehicle 1 arrives at the facility where the battery 100 is chargeable, and to suppress additional electric power consumption due to the temperature adjustment of the battery 100 in response to the operation of the user to adjust the temperature of the battery 100.

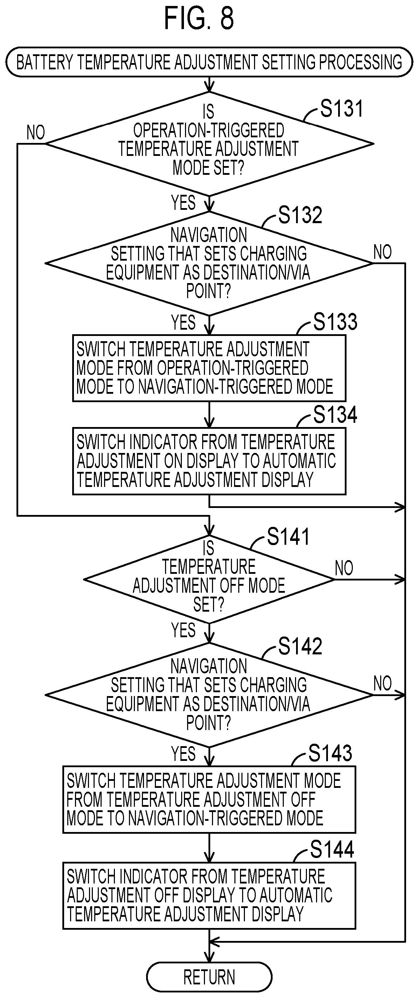

FIGS. 1, 3A, 3B, 3C, and 4 of the first embodiment are also common to the fifth embodiment. FIG. 8 is a flowchart showing the flow of the battery temperature adjustment setting processing in the fifth embodiment. With reference to FIG. 8, the battery temperature adjustment setting processing is called, from the higher-level processing, and executed by the CPU 301 of the ECU 300 at a predetermined cycle. For steps in FIG. 8 having the same reference numerals as steps in FIGS. 6, 7, the same processing as steps in FIGS. 6, 7 is performed. Thus, duplicated descriptions will not be repeated.

When determination is made that the navigation setting that sets the charging equipment as the destination or via point is received (YES in step S132), the CPU 301 switches the setting mode of the cooling/heating device 800 from the operation-triggered temperature adjustment mode to the navigation-triggered temperature adjustment mode (step S133), and switches the indicator of the pre-conditioning switch 304 from the temperature adjustment on display shown in FIG. 3A to the automatic temperature adjustment display shown in FIG. 3B (step S134). Thereafter, the CPU 301 returns the processing to be executed to the higher-level processing, which is the calling source of the battery temperature adjustment setting processing.

### Modification Example

(1) In the embodiment described above, as shown in FIGS. 1, 3A, 3B, and 3C, the pre-conditioning switch 304 is assumed to be the push-button switch having the indicator on the operation surface. However, the present disclosure is not limited thereto. The pre-conditioning switch 304 may be a button displayed on a screen of the touch panel display 704 of the HMI device 700. In this case, the setting mode of the cooling/heating device 800 may be displayed on the button displayed on the screen, or may be displayed on another part of the screen.
(2) In the embodiment described above, as shown in step S174 and step S175 of FIG. 4, in the operation-triggered temperature adjustment mode, when the temperature of the battery 100 reaches the appropriate temperature, the control of maintaining the appropriate temperature is executed. However, the present disclosure is not limited thereto. When the temperature of the battery 100 reaches the appropriate temperature, the temperature adjustment control may be ended.
(3) In the second embodiment described above, as shown in step S115 of FIG. 5, when the setting mode is the navigation-triggered temperature adjustment mode, with the rejection of the trigger that the predetermined operation, such as the turning on of the pre-conditioning switch 304, is executed, the navigation-triggered temperature adjustment mode is prioritized over the operation-triggered temperature adjustment mode.
   However, the present disclosure is not limited thereto. Other methods may be employed as the method of prioritizing the navigation-triggered temperature adjustment mode. For example, when the setting mode is the navigation-triggered temperature adjustment mode, the predetermined operation may be made non-executable. Further, in a case where the setting mode is the navigation-triggered temperature adjustment mode, when the predetermined operation is executed, the user may be requested to confirm whether or not to switch from the navigation-triggered temperature adjustment mode to the operation-triggered temperature adjustment mode.
(4) In the third embodiment described above, as shown in step S135 of FIG. 6, in a case where the setting mode is the operation-triggered temperature adjustment mode, when the traveling route includes the facility where the battery 100 is chargeable, with the rejection of the trigger that the switching is made to the navigation-triggered temperature adjustment mode in which the temperature adjustment is performed on the battery 100, which is triggered by the inclusion of the facility where the battery 100 is chargeable in the traveling route, the operation-triggered temperature adjustment mode is prioritized.
   Further, in the fourth embodiment described above, as shown in steps S153, S154, and S157 of FIG. 7, in a case where the setting mode is the operation-triggered temperature adjustment mode, when the traveling route includes the facility where the battery 100 is chargeable, the user is requested to confirm whether or not to switch to the operation-triggered temperature adjustment mode to prioritize the operation-triggered temperature adjustment mode.
   However, the present disclosure is not limited thereto. Other methods may be employed as the method of prioritizing the operation-triggered temperature adjustment mode. For example, when the setting mode is the operation-triggered temperature adjustment mode, the shift to the navigation-triggered temperature adjustment mode may not be determined.
(5) In the fourth embodiment described above, as shown in step S153 of FIG. 7, the message to confirm with the user whether or not the setting mode is shifted from the operation-triggered temperature adjustment mode to the navigation-triggered temperature adjustment mode is output on the touch panel display 704 of the HMI device 700. However, the present disclosure is not limited thereto. Such a confirmation message may be output on the touch panel display of the user terminal 3.
(6) The respective embodiments described above may be combined in any manner as long as the combination is possible. For example, the first embodiment may be combined with any one of the third to fifth embodiments, or the second embodiment may be combined with any one of the third to fifth embodiments.
(7) The embodiments described above can be regarded as a disclosure of a battery temperature adjustment system including the cooling/heating device 800 and the ECU 300, a disclosure of a vehicle, such as the electrified vehicle 1, including the battery temperature adjustment system, and a disclosure of a battery temperature adjustment method or a battery temperature adjustment program for adjusting the temperature of the battery 100 in the battery temperature adjustment system or the vehicle.

### Summary

(1) As shown in FIG. 1, a battery temperature adjustment system is configured to adjust a temperature of a battery 100 mounted on an electrified vehicle 1, and includes a cooling/heating device 800 configured to adjust the temperature of the battery 100, and a processor (for example, CPU 301 of the ECU 300) configured to control the cooling/heating device 800. As shown in FIG. 2 and the like, a setting mode of the cooling/heating device 800 includes a navigation-triggered temperature adjustment mode that is a setting in which, triggered by inclusion, in a traveling route of the electrified vehicle 1, of a facility (for example, EVSE 2) where the battery 100 is chargeable, the temperature of the battery 100 is adjusted to be in a first temperature range adequate for charging the battery 100 when the electrified vehicle 1 arrives at the facility, and an operation-triggered temperature adjustment mode that is a setting in which, when a predetermined operation (for example, turning on operation of the pre-conditioning switch 304) of a user of the electrified vehicle 1 to adjust the temperature of the battery 100 to be in a second temperature range adequate for charging or traveling is received, the temperature of the battery 100 is adjusted to be in the second temperature range.
(2) In the above (1), as shown in FIG. 4, the processor is configured to control the cooling/heating device 800 to adjust the temperature of the battery 100 in accordance with the setting mode. As shown in FIG. 2 of the first embodiment, in a case where the setting mode is the navigation-triggered temperature adjustment mode, when the predetermined operation is received, the processor is configured to prioritize the operation-triggered temperature adjustment mode (for example, step S 113).
   Accordingly, in a case of the navigation-triggered temperature adjustment mode in which the temperature adjustment is performed on the battery 100, which is triggered by the inclusion of the facility where the battery 100 is chargeable in the traveling route, when the predetermined operation of the user to perform the temperature adjustment of the battery 100 is received, the operation-triggered temperature adjustment mode in which the temperature adjustment is performed on the battery 100 in response to the predetermined operation of the user is prioritized. As a result, it is possible to quickly adjust the temperature of the battery 100 in response to the operation of the user to adjust the temperature of the battery 100.
(3) In the above (1), as shown in FIG. 4, the processor is configured to control the cooling/heating device 800 to adjust the temperature of the battery 100 in accordance with the setting mode. As shown in FIG. 5 of the second embodiment, in a case where the setting mode is the navigation-triggered temperature adjustment mode, when the predetermined operation is received, the processor is configured to reject the predetermined operation and maintain the navigation-triggered temperature adjustment mode (for example, step S 115).
   Accordingly, in a case of the navigation-triggered temperature adjustment mode in which the temperature adjustment is performed on the battery 100, which is triggered by the inclusion, in the traveling route, of the facility where the battery 100 is chargeable, when the user's predetermined operation to perform the temperature adjustment on the battery 100 is received, the predetermined operation is rejected, and the navigation-triggered temperature adjustment mode is maintained without being switched to the operation-triggered temperature adjustment mode in which the temperature adjustment is performed on the battery 100 in response to the user's predetermined operation. As a result, it is possible to set the temperature of the battery 100 to be in the temperature range adequate for the charging when the electrified vehicle 1 arrives at the facility where the battery 100 is chargeable, and to suppress additional electric power consumption due to the temperature adjustment of the battery 100 in response to the operation of the user to adjust the temperature of the battery 100.
(4) In the above (1), as shown in FIG. 4, the processor is configured to control the cooling/heating device 800 to adjust the temperature of the battery 100 in accordance with the setting mode. As shown in FIG. 6 of the third embodiment, in a case where the setting mode is the operation-triggered temperature adjustment mode, when the traveling route includes the facility, the processor is configured to maintain the operation-triggered temperature adjustment mode (for example, step S135).
   Accordingly, in a case of the operation-triggered temperature adjustment mode in which the temperature adjustment is performed on the battery 100 in response to the predetermined operation of the user, when the traveling route includes the facility where the battery 100 is chargeable, the operation-triggered temperature adjustment mode is maintained without being switched to the navigation-triggered temperature adjustment mode in which the temperature adjustment is performed on the battery 100, which is triggered by the inclusion, in the traveling route, of the facility where the battery 100 is chargeable. As a result, it is possible to quickly adjust the temperature of the battery 100 in response to the operation of the user to adjust the temperature of the battery 100. For example, when a drive force is desired to be secured in a current traveling scene, the operation-triggered temperature adjustment mode in which the temperature of the battery 100 is adjusted to be in the temperature range adequate for the traveling is maintained. Therefore, it is possible to shorten a time until the temperature of the battery 100 is in the temperature range adequate for the traveling.
(5) In the above (1), as shown in FIG. 4, the processor is configured to control the cooling/heating device 800 to adjust the temperature of the battery 100 in accordance with the setting mode. As shown in FIG. 7 of the fourth embodiment and FIG. 8 of the fifth embodiment, in a case where the setting mode is the operation-triggered temperature adjustment mode, when the traveling route includes the facility, the processor is configured to prioritize the navigation-triggered temperature adjustment mode (for example, from step S153 to step S155 of FIG. 7, and step S143 of FIG. 8).
   Accordingly, in a case of the operation-triggered temperature adjustment mode in which the temperature adjustment is performed on the battery 100 in response to the predetermined operation of the user, when the traveling route includes the facility where the battery 100 is chargeable, the navigation-triggered temperature adjustment mode in which the temperature adjustment is performed on the battery 100, which is triggered by the inclusion, in the traveling route, of the facility where the battery 100 is chargeable, is prioritized over the operation-triggered temperature adjustment mode. As a result, it is possible to set the temperature of the battery 100 to be in the temperature range adequate for the charging when the electrified vehicle 1 arrives at the facility where the battery 100 is chargeable, and to suppress additional electric power consumption due to the temperature adjustment of the battery 100 in response to the operation of the user to adjust the temperature of the battery 100.
(6) In the above (1), as shown in FIG. 1, the battery temperature adjustment system further includes a display device (for example, touch panel display 704 of the HMI device 700) configured to display the setting mode of the cooling/heating device 800. As shown in FIGS. 3A, 3B, and 3C, the display device is configured to include a common element (for example, picture of a dry cell in FIGS. 3A, 3B, and three vertical wavy lines in FIGS. 3A, 3B) in the display in the navigation-triggered temperature adjustment mode and the operation-triggered temperature adjustment mode, and add a specific element (for example, character "Auto" in FIG. 3B) to the common element of any one (for example, the navigation-triggered temperature adjustment mode) of the navigation-triggered temperature adjustment mode and the operation-triggered temperature adjustment mode. As shown in FIG. 2 of the first embodiment, FIG. 5 of the second embodiment, FIG. 6 of the third embodiment, FIG. 7 of the fourth embodiment, and FIG. 8 of the fifth embodiment, the processor is configured to control the display device to display the common element when the setting mode is the navigation-triggered temperature adjustment mode and the operation-triggered temperature adjustment mode, and control the display device to display the specific element when the setting mode is one of the navigation-triggered temperature adjustment mode and the operation-triggered temperature adjustment mode (for example, step S114 of FIG. 2, step S116 of FIG. 5, step S124 of FIG. 2 and FIG. 5, step S131 of FIG. 6, step S156 and step S158 of FIG. 7, step S134 of FIG. 8, and step S144 of FIG. 6 to FIG. 8).

Accordingly, in a case where the setting mode is the navigation-triggered temperature adjustment mode in which the temperature adjustment is performed on the battery 100, which is triggered by the inclusion, in the traveling route, of the facility where the battery 100 is chargeable, and the operation-triggered temperature adjustment mode in which the temperature adjustment is performed on the battery 100 in response to the predetermined operation of the user, the common element is displayed on the display device in both the navigation-triggered temperature adjustment mode and the operation-triggered temperature adjustment mode, and the specific element is displayed on the display device in any one of the navigation-triggered temperature adjustment mode and the operation-triggered temperature adjustment mode. As a result, it is possible to inform the user of a plurality of settings for adjusting the temperature of the battery 100 in an easily understandable manner, and thus suppress reduction in user usability.

The embodiments disclosed this time are requested to be considered to be exemplary and not restrictive in all respects. The scope of the present disclosure is indicated by the claims rather than the description of the embodiments described above, and all modifications within the meaning and scope equivalent to the claims are intended to be included.

## Claims

1. A battery temperature adjustment system configured to adjust a temperature of an electricity storage device (100) mounted on a vehicle (1), the battery temperature adjustment system comprising:
a temperature adjustment device (800) configured to adjust a temperature of the electricity storage device (100); and
a processor (300) configured to control the temperature adjustment device (800), wherein:
a setting mode of the temperature adjustment device (800) includes
a first mode that is a setting in which, triggered by including a facility where the electricity storage device (100) is chargeable in a traveling route of the vehicle (1), a temperature of the electricity storage device (100) is adjusted to be in a first temperature range adequate for charging the electricity storage device (100) when the vehicle (1) arrives at the facility, and
a second mode that is a setting in which a temperature of the electricity storage device (100) is adjusted to be in a second temperature range when a predetermined operation of a user of the vehicle (1) is received to adjust the temperature of the electricity storage device (100) to be in the second temperature range adequate for charging or traveling; and
the processor (300) is configured to
control the temperature adjustment device (800) to adjust a temperature of the electricity storage device (100) in accordance with the setting mode, and
prioritize the first mode when the setting mode is the second mode and the traveling route includes the facility.

2. The battery temperature adjustment system according to claim 1, wherein the processor (300) is configured to prioritize the second mode in a case where the predetermined operation is received when the setting mode is the first mode.

3. The battery temperature adjustment system according to claim 1, wherein the processor (300) is configured to reject the predetermined operation and maintain the first mode when the predetermined operation is received in a case where the setting mode is the first mode.

4. The battery temperature adjustment system according to any one of claims 1 to 3, further comprising a display device (704) configured to display the setting mode of the temperature adjustment device (800), wherein:
the display device (704) is configured to
include a common element in a display in the first mode and the second mode, and
add a specific element to the common element being one of the first mode and the second mode; and
the processor (300) is configured to
control the display device (704) to display the common element when the setting mode is the first mode and the second mode, and
control the display device (704) to display the specific element when the setting mode is the one of the first mode and the second mode.

5. A battery temperature adjustment method for a battery temperature adjustment system that is configured to adjust a temperature of an electricity storage device (100) mounted on a vehicle (1), the battery temperature adjustment system including a temperature adjustment device (800) and a processor (300), the battery temperature adjustment method comprising:
controlling, by the processor (300), the temperature adjustment device (800) to adjust a temperature of the electricity storage device (100) according to a setting mode of the temperature adjustment device (800); and
prioritizing, by the processor (300), a first mode in a case where a traveling route includes a facility when the setting mode is a second mode, wherein:
the temperature adjustment device (800) is configured to adjust a temperature of the electricity storage device (100);
the processor (300) is configured to control the temperature adjustment device (800);
the setting mode includes the first mode and the second mode;
the first mode is a mode that is a setting in which, triggered by including the facility where the electricity storage device (100) is chargeable in the traveling route of the vehicle (1), a temperature of the electricity storage device (100) is adjusted to be in a first temperature range adequate for charging the electricity storage device (100) when the vehicle (1) arrives at the facility; and
the second mode is a mode that is a setting in which a temperature of the electricity storage device (100) is adjusted to be in a second temperature range when a predetermined operation of a user of the vehicle (1) is received to adjust the temperature of the electricity storage device (100) to be in the second temperature range adequate for charging or traveling.
